# EUROPEAN PATENT APPLICATION

(11) **EP 4 249 239 A1**
(43) Date of publication of application: **27.09.2023**
(21) Application number: 22164346.3
(22) Date of filing: 25.03.2022
(51) Int. Cl.: B32B 17/10

(54) **INTERLAYER FILMS WITH UV PROTECTION FOR LAMINATED SAFETY GLASS**

(71) Applicant: Kuraray Europe GmbH, 65795 Hattersheim (DE)
(72) Inventor: Lellig, Philipp, 50670 Köln (DE)
(74) Representative: Janßen, Christian Oliver

(57) **Abstract**

The invention relates to plasticized interlayer films based on polyvinyl acetal comprising certain UV absorbers.

## Description

The invention relates to plasticized interlayer films based on polyvinyl acetal comprising certain UV absorbers.

For many decades, commercially available plasticized polyvinyl butyral (PVB) film for laminated glazing has been supplied with UV absorbers to block a portion of the UV radiation from the natural light. This is a simple way of ensuring protection against harmful UV radiation for people or objects behind the laminated glass.

UV-326 is a derivative of benzotriazole and is widely used as UV absorber in such laminates and known for its outstanding long-term stability and high absorption performance in almost the entire UV range. Furthermore, it can be introduced into the film formulation in a particularly simple manner during extrusion since it is relatively soluble in the commonly used plasticizers used for PVB and can thus be dissolved in the plasticizer prior to extrusion. However, UV-326 is under evaluation for potential health and environmental issues.

Accordingly, there is still a need in the industry to identify improved UV stabilizers for laminated glass. It has now been surprisingly found that certain triazine compounds are stable and effective UV absorbers that can be used as single UV absorbers in very low concentrations.

Thus, one objective of the present invention was to provide interlayer films with an improved environmental and health risk profile, better stability, especially better stability under UV irradiation, and/or better UV absorption.

These and other objectives have been solved by the present invention.

Accordingly, a first aspect of the present invention concerns an interlayer film for laminated glass comprising at least one polyvinyl acetal, at least one plasticizer and at least one triazine based UV absorber of formula I: 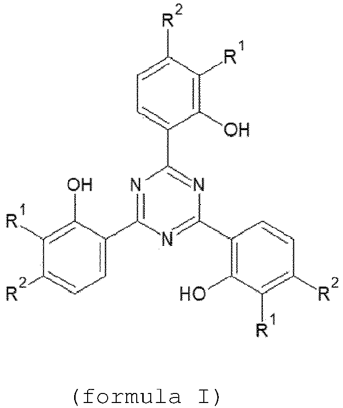 wherein R1 represents an alkyl group having 1 to 20 carbon atoms and R2 represents an alkoxy group having 1 to 20 carbon atoms.

The term "alkyl" refers to a monovalent group that is a radical of an alkane and includes groups that are linear, branched, cyclic, bicyclic, or a combination thereof. The alkyl group has 1 to 20 carbon atoms. Preferably, the alkyl group contains 1 to 10 carbon atoms, more preferably 1 to 5 carbon atoms, and most preferably 1 to 3 carbon atoms. Suitable examples of alkyl groups include methyl, ethyl, propyl, isopropyl, n-butyl, sec-butyl, tert-butyl, tert-amyl, n-pentyl, n-hexyl, n-heptyl, n-octyl, n-nonyl, n-decyl, eicosanyl, cyclopropyl, cyclobutyl, cyclopentyl, cyclopentylmethyl, cyclopentylethyl, cyclopentylbutyl, cyclohexyl, cyclohexylmethyl, cyclohexylethyl, cyclohexylbutyl, methylcyclohexylmethyl, ethylcyclohexylmethyl, and ethylcyclohexylethyl. Specifically, R1 is a methyl group.

The term "alkoxy" refers to a monovalent group having an oxy group bonded directly to an alkyl group as defined above. Specifically, R2 is an n-hexyloxy group.

In an especially preferred embodiment, the triazine compound is represented by formula II:

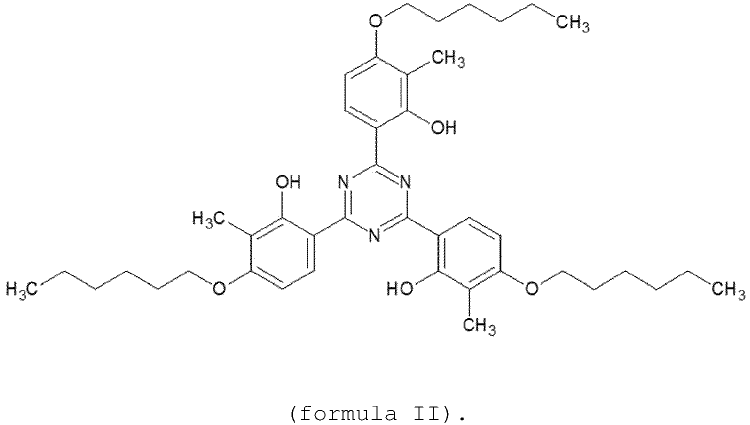

The polyvinyl acetal used in accordance with the present invention results in particular from the reaction of at least one polyvinyl alcohol with one or more aliphatic unbranched aldehyde containing 2 to 10 carbon atoms. To this end, n-butyraldehyde is preferably used and the preferred polyvinyl acetal is PVB.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The polyvinyl alcohol content and proportion of polyvinyl acetate groups were determined in accordance with DIN ISO 3681 (Acetate content) and DIN ISO 53240 (PVA content).

The inventive interlayer films comprise at least one plasticizer. Preferably, such plasticizer(s) can be selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate

- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid. By definition, plasticisers are organic liquids having a high boiling point. For this reason, further types of organic liquids having a boiling point above 120 °C can also be used as plasticiser.

The interlayer film comprises at least 22 wt%, such as 22.0 to 45.0 wt%, preferably 25.0 to 32.0 wt% and in particular 25.0 to 30.0 wt%.

Additionally, the interlayer film contain further additives, such as residual quantities of water, adhesion regulators, optical brighteners or fluorescent additives, colourants, processing aids, inorganic or organic nanoparticles, pyrogenic silicic acid and/or surface active substances.

It has been found by the present inventors that the triazine compounds used in the present invention are extremely effective UV absorbers and can thus be used as a single UV absorber and/or in very low concentrations.

Accordingly, the total amount of UV absorbers present in the interlayer film is preferably less than 0.60 wt%, more preferably less than 0.50 wt%, even more preferably less than 0.40 wt%, and most preferably less than 0.20 wt%, specifically less than 0.10 wt%. The total amount in wt% shall refer to the combined wt% of all different UV absorbers present in the total mass of the interlayer film.

Also preferably, the triazine compound of formula I or formula II is present in the interlayer film in an amount of less than 0.20 wt%, more preferably less than 0.15 wt%, and most preferably less than 0.10 wt%.

Also preferably, the triazine compound represented by formula II is the only UV absorber present in the interlayer film. In other words, no compound other than the triazine of formula II serving the purpose to block UV light is added to the interlayer film.

Another aspect of the present invention is the use of the interlayer film described above for the manufacture of laminated glass, especially for the manufacture of museum glazing, shop window glazing, as motor vehicle glazing, aircraft glazing, in photovoltaic modules in LED or OLED screens, televisions, computer screens, large screens), in electrochromic, photochromic, photoelectrochromic glass elements.

Yet another aspect of the present invention is a laminated glass comprising the interlayer film described above.

Preferably, the yellowness index YI of the laminated glass increases less than 20%, more preferably less than 18%, even more preferably less than 15%, most preferably less than 10% after an irradiation period of 5000 hours measured according to the method described in the examples.

Also preferably, the yellowness index YI increases by less than 0.2, more preferably by less than 0.15 and most preferably by less than 0.1 after an irradiation period of 5000 hours measured according to the description.

Also preferably, the UV transmission is equal or below 4% after an irradiation period of 5000 hours measured according to the method described in the examples.

The lamination step for producing the laminated glass is preferably carried out such that the interlayer film is positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours.

Vacuum laminators may also be used. These consist of a chamber that can be heated and evacuated, in which laminated glass can be laminated within 30 - 60 minutes. Reduced pressures from 0.01 to 300 mbar and temperatures from 100 to 200 °C, in particular 130 - 160 °C, have proven their worth in practice.

The glass film laminate may then be subjected to an autoclave process.

### Examples

### Measurement of the yellowness index

In order to quantify the yellowness of the interlayer film, the yellowness index YI was measured according to ASTM E313 using a ColorQuest XE spectrophotometer in a geometry of 2° and illuminant type C.

### Measurement of the haze

The haze value according to ASTM 1003 procedure B was measured on glass laminates using a ColorQuest XE spectrophotometer in a geometry of 2° and illuminant type C.

### Measurement of light transmission

The light transmission according to EN 410:2011 was measured on glass laminates using a Perkin-Elmer Lambda 950 UV-/VIS-spectrophotometer.

### Measurement of the UV-transmission

The UV-transmission according to ISO 13837 Convention A (300 - 400 nm) was measured on glass laminates using a Perkin-Elmer Lambda 950 UV-/VIS-spectrophotometer.

### Testing of the light stability

To test their light stability, laminates were placed in a Q-Sun Xenon radiation chamber and optical measurements were done after 0, 1000, 2000, 3000, and 5000 hours. The test condition of the radiation chamber were chosen according to the "Kalahari" test program PV3929:
Filter: Daylight-Q (X-7460)
Radiation intensity @ 340 nm: 0.60 W/m2
Black standard temperature: 90°C
Chamber temperature: 50°C
Rel. humidity: 20%

### Preparation of the interlayer films

PVB-films with compositions as listed in table 1 were prepared. The UV absorber Riasorb UV-326 (CAS: 3896-11-5, Comparative Example 1) and the UV-absorber Riasorb 470 (CAS: 222529-65-9, structure given in formula II, Example 1) are commercially available from Rianlon. The UV absorbers were dissolved in the plasticizer 3G8 by stirring and heating to 80 °C. The interlayer films were produced by film extrusion using a Leistritz co-rotating double-screw extruder. The films were extruded through a flat slit die with a slit width of 1100 mm and cooled down in a water basin. The obtained film showed a thickness of around 0.76 mm.

Test laminates were produced using one layer of PVB film in a thickness of around 0.76 mm sandwiched between two conventional 2.1 mm automotive grade soda lime glasses (PlaniClear^{®}) in an autoclave containing the following steps: 30 min heating phase with pressurization up to 12 bar, 30 min hold time at 12 bar and 140 °C., and 30 min cooling down phase to 40 °C with concomitant release of pressure.

**Table 1: Compositions and test results**

| | **Example 1** | **Comparative Example 1** |
|---|---|---|
| **recipe** | | |
| PVB / wt% | 72.5 | 72.5 |
| 3G8 / wt% | 27.5 | 27.5 |
| Mg(2+)-salt / wt% | 0.12 | 0.12 |
| Riasorb 470 / wt% | 0.125 | - |
| Riasorb UV-326 / wt% | - | 0.15 |
| Songnox 2450 / wt% | 0.0365 | 0.0365 |

| **pristine sample** | | |
|---|---|---|
| YI | 1.12 | 0.53 |
| Haze / % | 0.37 | 0.17 |
| Light Transmission / % | 90.5 | 90.6 |
| UV-Transmission / % | 3.1 | 3.4 |

| **after 1000 hours** | | |
|---|---|---|
| YI | 1.09 | 0.55 |
| Haze / % | 0.12 | 0.11 |
| Light Transmission / % | 90.2 | 90.2 |
| UV-Transmission / % | 3.1 | 3.6 |

| **after 2000 hours** | | |
|---|---|---|
| YI | 1.11 | 0.71 |
| Haze / % | 0.11 | 0.26 |
| Light Transmission / % | 90.3 | 90.3 |
| UV-Transmission / % | 3.1 | 3.5 |

| **after 3000 hours** | | |
|---|---|---|
| YI | 1.14 | 1.04 |
| Haze / % | 0.09 | 0.18 |
| Light Transmission / % | 90.3 | 90.2 |
| UV-Transmission / % | 3.1 | 3.8 |

| **after 5000 hours** | | |
|---|---|---|
| YI | 1.17 | 1.71 |
| Haze / % | 0.19 | 0.37 |
| Light Transmission / % | 90.0 | 89.9 |
| UV-Transmission / % | 3.8 | 4.2 |

The results of the measurements of the test laminates are given in table 1.

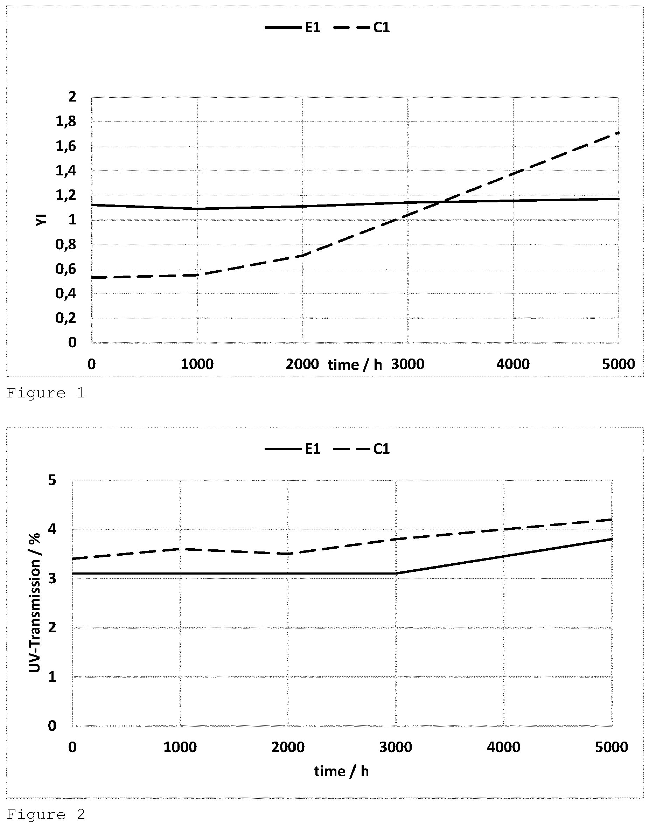

Figure 1 shows that the conventionally used UV absorber Riasorb UV-326 of Comparative Example 1 degrades over time in the light stability test as shown by an increase in the yellowness index. On the other hand, the UV absorber of formula II of Example 1 according to the invention does hardly show any noticeable increase in the yellowness index, which is a sign for an extremely good light stability of the interlayer film.

Figure 2 shows that with the degradation of the conventionally used UV absorber Riasorb UV-326 of Comparative Example 1, the UV absorption of the laminate produced with said UV absorber substantially deteriorates in the light stability test to increase above the value of 4, which is a common threshold value in a variety of specifications for automotive glazing. On the other hand, since the UV absorber of formula II of Example 1 according to the invention hardly degrades, the UV absorption remains below the value of 4 in the light stability test.

## Claims

1. An interlayer film for laminated glass comprising at least one polyvinyl acetal, at least one plasticizer and at least one triazine based UV absorber of formula I: 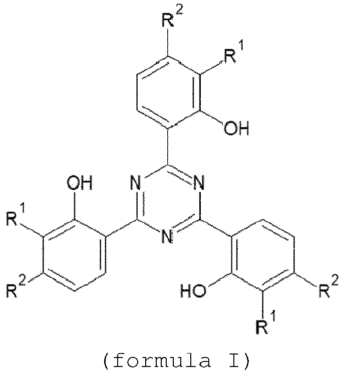 wherein R1 represents an alkyl group having 1 to 20 carbon atoms and R2 represents an alkoxy group having 1 to 20 carbon atoms.

2. The interlayer film according to claim 1 wherein R1 is a methyl group.

3. The interlayer film according to claim 1 or 2 wherein R2 is a n-hexyloxy group.

4. The interlayer film according to any one of claims 1 to 3 wherein the triazine compound is represented by formula II:

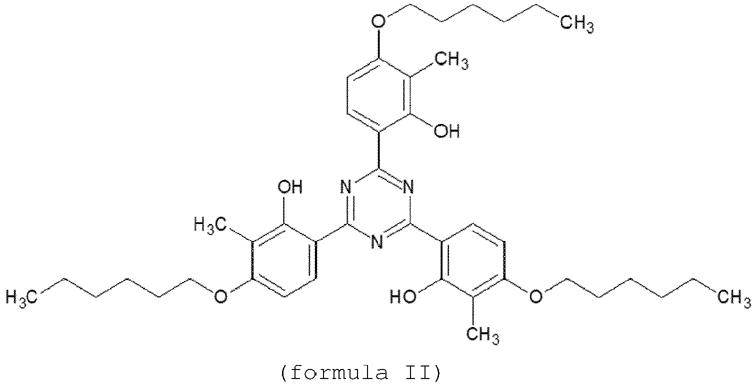

5. The interlayer film according to any one of claims 1 to 4 wherein the total amount of UV absorbers present in the interlayer film is less than 0.60 wt%.

6. The interlayer film according to any one of claim 1 to 5 wherein the triazine compound of formula II is present in the interlayer film in an amount of less than 0.20 wt%.

7. The interlayer film according to any one of claim 1 to 6 wherein the triazine compound represented by formula II is the only UV absorber present in the interlayer film.

8. The interlayer film according to any one of claim 1 to 7 wherein the polyvinyl acetal is polyvinyl butyral.

9. The interlayer film according to any one of claim 1 to 8 wherein the plasticizer is present in the interlayer film in an amount of 25 to 30 wt%.

10. The interlayer film according to any one of claims 1 to 9 wherein the plasticizer is triethylene glycol bis (2-ethylhexanoate).

11. Use of the interlayer film according to any one of claims 1 to 10 for the manufacture of laminated glass.

12. A laminated glass comprising the interlayer film according to any one of the claims 1 to 10.

13. The laminated glass according to claim 12 wherein the yellowness index YI increases less than 20% after an irradiation period of 5000 hours measured according to the description.

14. The laminated glass according to claim 12 or 13 wherein the yellowness index YI increases by less than 0.2 after an irradiation period of 5000 hours measured according to the description.

15. The laminated glass according to any one of the claims 12 to 14 wherein the UV transmission is equal or below 4% after an irradiation period of 5000 hours measured according to the description.
